# EUROPÄISCHE PATENTSCHRIFT

(11) **EP 3 129 842 B1**
(45) Veröffentlichungstag und Bekanntmachung des Hinweises auf die Patenterteilung: **17.07.2019**
(21) Anmeldenummer: 14729251.0
(22) Anmeldetag: 28.05.2014
(51) Int. Cl.: G05B 23/02, H02J 13/00

(54) **VERFAHREN UND LEITSTELLENEINRICHTUNG ZUM ÜBERWACHEN EINER ANLAGE**
METHOD AND CONTROL-CENTER APPARATUS FOR MONITORING AN INSTALLATION
PROCÉDÉ ET ÉQUIPEMENT DE POSTE DE CONDUITE POUR LA SURVEILLANCE D'UNE INSTALLATION

(43) Veröffentlichungstag der Anmeldung: 15.02.2017
(73) Patentinhaber: Siemens Aktiengesellschaft, 80333 München (DE)
(72) Erfinder: NEISIUS, Hans-Theo, 90556 Seukendorf (DE); PLATZ, Axel, 81479 München (DE); SANDER, Sonja, 80797 München (DE); WITTMANN, Christoffer, 96052 Bamberg (DE); BECHSTEDT, Ulrike, 83620 Feldkirchen-Westerham (DE); KRALINA, Yulia, 85464 Finsing (DE)
(86) Internationale Anmeldenummer: PCT/EP2014/061041
(87) Internationale Veröffentlichungsnummer: WO 2015/180766

(56) Entgegenhaltungen:
- EP-A1- 1 895 416
- WO-A1-02/33802
- US-A1- 2006 238 364
- US-A1- 2009 030 556
- US-B1- 6 486 899

## Beschreibung

Die Erfindung betrifft ein Verfahren zum Überwachen einer eine vernetzte Topologie aufweisenden Anlage, bei dem an einer Mehrzahl von Messstellen in der Anlage einen Zustand der Anlage an der jeweiligen Messstelle charakterisierende Messwerte erfasst werden, die erfassten Messwerte an eine Leitstelleneinrichtung übermittelt werden, die anhand der Messwerte Zustandswerte ermittelt, die einen Zustand an vorgegebenen Zustandsbeobachtungsstellen der Anlage angeben, und die Zustandswerte zur Erzeugung einer visuellen Anzeige des Zustands der Anlage verwendet werden. Die Erfindung betrifft auch eine Leitstelleneinrichtung, mit der ein solches Verfahren durchgeführt wird.

Ein solches Verfahren ist hinsichtlich einer Anlage in Form eines elektrischen Energieversorgungsnetzes beispielsweise aus der Europäischen Patentschrift EP 2095482 B1 bekannt.

Um einen reibungslosen und sicheren Betrieb von Anlagen, wie z.B. elektrischen Energieversorgungsnetzen, zu gewährleisten, werden in sogenannten Netzleitstellen für den Zustand der Anlage charakteristische Messwerte der Anlage überwacht, um zu ermitteln, ob sich die Anlage in einem bestimmungsgemäßen Betriebszustand oder aber einem kritischen Zustand befindet. Als Anlagen können in diesem Fall prinzipiell jegliche Anlage mit vernetzter Topologie angesehen werden, wie beispielsweise elektrische Energieversorgungsnetze, pneumatische Netze (z.B. Gasverteilnetze, Luftverteilnetze), hydraulische Netze (z.B. Wasserverteilnetze, Ölverteilnetze), Daten-, Informations- und Kommunikationsnetze oder Verkehrsnetze (z.B. Autobahnen, Schienennetze). Die im Folgenden gegebenen Erläuterungen und Ausführungsbeispiele beziehen sich lediglich beispielhaft auf eine Anlage in Form eines elektrischen Energieverteilnetzes, sie sind jedoch in allen Belangen auch auf andere Netzarten übertragbar. Anstelle der für ein Energieversorgungsnetz relevanten Messwerte wie z.B. Ströme und Spannungsen werden in diesen Fällen entsprechende Messwerte, wie z.B. Durchflussraten, Drücke, Temperaturen, Kommunikationsauslastungen (benutzte Bandbreite) und Verkehrsdichten bzw. -ströme verwendet.

Zur Erkennung eines Betriebszustands einer Anlage in Form eines elektrischen Energieversorgungsnetzes werden an ausgewählten Messstellen des elektrischen Energieversorgungsnetzes Messwerte elektrischer Messgrößen, wie z.B. Strom, Spannung, Leistung und Frequenz, mittels geeigneter Wandler erfasst und üblicherweise in digitaler Form der Netzleitstelle zur Auswertung und Beobachtung zugeführt. Um einen zeitlichen Bezug der einzelnen Messwerte zueinander zu gewährleisten, können die aufgenommenen Messwerte um sogenannte Zeitstempel, also Uhrzeitinformationsdaten, ergänzt werden, die z.B. diejenige Uhrzeit angeben, zu denen die Messwerte erfasst worden sind. Solche Zeitstempel können beispielsweise mit einer Genauigkeit von einer Millisekunde vergeben werden.

Da die Anzahl der in einem Energieversorgungsnetz vorzusehenden Messstellen insbesondere aus Kostengesichtspunkten begrenzt ist, wird in der Netzleitstelle von einer Leitstelleneinrichtung anhand der Messwerte von den vorhandenen Messstellen ein nahezu flächendeckender Netzzustand ermittelt. Als Ergebnis dieser Ermittlung liegen Zustandswerte für vorgegebene Beobachtungsstellen des Energieversorgungsnetzes vor, die einen aktuellen und/oder einen erwarteten Zustand des Energieversorgungsnetzes an den Beobachtungsstellen beschreiben. Die Beobachtungsstellen können hierbei beispielsweise identisch mit den Messstellen sein oder sogar eine Untermenge davon bilden (überbestimmtes Netz, z.B. Energieübertragungsnetz). In diesem Fall können die erfassten Messwerte ggf. direkt als Zustandswerte für die einzelnen Beobachtungsstellen übernommen werden. Es kann jedoch auch vorkommen, dass die Anzahl der Beobachtungsstellen größer ist als die Anzahl der tatsächlich im Energieversorgungsnetz vorhandenen Messstellen. Dabei können im Extremfall alle Punkte des Energieversorgungsnetzes als Beobachtungsstellen vorgegeben sein, in diesem Fall würde der Netzzustand quasi an jedem beliebigen Punkt des Energieversorgungsnetzes durch entsprechende Zustandswerte beschrieben. Beispielsweise können als Beobachtungsstellen bestimmte kritische Stellen im Energieversorgungsnetz, z.B. einzelne Sammelschienen, Transformatorstationen, Netzabgänge etc., ausgewählt werden, an denen der Zustand des Energieversorgungsnetzes überwacht wird. Aus den Zustandswerten generiert die Leitstelleneinrichtung daraufhin eine visuelle Anzeige, die dem Betriebspersonal des Energieversorgungsnetzes zur Anzeige gebracht wird. Dabei kann die visuelle Anzeige beispielsweise in Tabellenform oder in Diagrammform ausgeführt sein.

Aufgrund der großen Anzahl dargestellter Informationen besteht eine große Schwierigkeit für das Betriebspersonal in einer Netzleitstelle darin, einen sicheren Überblick über den tatsächlichen Netzzustand zu behalten und eine fundierte und differenzierte Aussage über die aktuelle Stabilität des elektrischen Energieversorgungsnetzes angeben zu können.

Ferner ist ein gattungsgemäßes Verfahren aus der Druckschrift US 2009/0030556 A1 bekannt. Weiterhin befasst sich die Druckschrift US 2006/0238364 A1 mit Verfahren zum Überwachen eines Energieversorgungsnetzes.

Der Erfindung liegt daher die Aufgabe zugrunde, ein Verfahren zum Überwachen einer Anlage anzugeben, bei dem insbesondere bei einer großen Anzahl von zu überwachenden Messstellen der Anlage in einfacher Weise eine Aussage über einen Betriebszustand und eine Stabilität der gesamten Anlage gegeben werden kann. Der Erfindung liegt zudem die Aufgabe zugrunde, eine entsprechende Leitstelleneinrichtung zur Durchführung eines solchen Verfahrens anzugeben.

Zur Lösung dieser Aufgabe wird erfindungsgemäß ein Verfahren der eingangs genannten Art vorgeschlagen, bei dem von der Leitstelleneinrichtung für zumindest ausgewählte der Zustandsbeobachtungsstellen Zustandsschwellenwerte bereitgestellt werden, die einen zulässigen Betriebsbereich der Anlage an der jeweiligen Zustandsbeobachtungsstelle begrenzen. Die für die ausgewählten Zustandsbeobachtungsstellen ermittelten Zustandswerte werden mit den zugehörigen Zustandsschwellenwerten verglichen und ausschließlich für diejenigen Zustandswerte, bei denen eine bereits stattgefundene oder eine drohende Verletzung des zugehörigen Zustandsschwellenwertes erkannt wird, wird von der Leitstelleneinrichtung eine grafische Repräsentation erzeugt. Mit der Leitstelleneinrichtung wird auch eine visuelle Anzeige einer Netzwerktopologie der Anlage erzeugt und mittels einer Anzeigeeinrichtung angezeigt. Zumindest den Zustandswerten, für die eine Repräsentation erzeugt wird, wird jeweils eine die Lage ihrer jeweiligen Zustandsbeobachtungsstelle in der Anlage angebende Ortsinformation zugeordnet und die jeweilige grafische Repräsentation wird unter Verwendung der Ortsinformation jeweils an derjenigen Stelle der angezeigten Netzwerktopologie dargestellt, die ihrer Lage in der Anlage entspricht.

Der besondere Vorteil des erfindungsgemäßen Verfahrens besteht darin, dass auf einer die Topologie der Anlage angebenden visuellen Darstellung, bei der es sich beispielsweise um einen funktionalen oder einen geografischen Netzplan handeln kann, dem Betriebspersonal ausschließlich diejenigen Netzzustände angezeigt werden, die einen - sich androhenden oder bereits stattgefundenen - kritischen Betriebszustand der Anlage angeben. Da die Anzeige in Form der grafischen Repräsentation neben der Tatsache, dass ein kritischer Zustand vorliegt, auch dessen Lage in der Anlage anzeigt, kann das Betriebspersonal sehr schnell und intuitiv den Zustand der Anlage erfassen und gegebenenfalls Gegenmaßnahmen ergreifen, um einen kritischen Netzzustand einzudämmen. Hierbei wird es zudem als vorteilhaft angesehen, wenn die Darstellung der Netzwerktopologie in zurückhaltender Farbgebung (z.B. in Graustufen) erfolgt, um das Augenmerk des Betriebspersonals nicht von der Darstellung der die kritischen Zustände angebenden grafischen Repräsentationen abzulenken.

Schwellenwertverletzungen sowie angehende Schwellenwertverletzungen können auf diese Weise einfach identifiziert und dem Betriebspersonal zur Anzeige gebracht werden. Dabei findet eine Fokussierung der angezeigten Informationen auf die tatsächlich kritischen Stellen statt, so dass für das Betriebspersonal eine schnelle und einfach verständliche Darstellung erzeugt werden kann. Die Fokussierung der Informationen besteht hierbei insbesondere aus der Beschränkung auf tatsächlich relevante Informationen wie das Hervorheben bzw. Betonen von topologischen Informationen (z.B. Leitungen, Datenkabel, Verkehrsadern), die einen Bezug zum betroffenen Netzabschnitt haben. Außerdem kann auch eine Darstellung von numerischen Werten (z.B. Höhe der Schwellenwertverletzung in Prozent) angegeben werden. Die Anzeige kann zudem auch durch Auswahl der Art der Information (z.B. Wirkleistung, Blindleistung, Spannungsebene, Drucklevel, Netzbereich, Kritikalität der Schwellenwertverletzung - z.B. mehr als 20% über dem Schwellenwert) manuell weiter gefiltert werden, um eine noch größere Verdichtung der relevanten Informationen zu erreichen.

Ab wann ein Zustandswert als ein solcher, der eine drohende Schwellenwertverletzung anzeigt, erkannt werden soll, kann in der Konfiguration der Leitstelleneinrichtung als Parametereinstellung vorgegeben werden. Beispielsweise kann eine Annäherung auf ≤ 10% an den jeweiligen Zustandsschwellenwert als drohende Schwellenwertverletzung angesehen werden; andere Einstellungen sind jedoch ebenfalls möglich. Auch können für unterschiedliche Zustandsgrößen und/oder Beobachtungsstellen unterschiedliche Einstellungen vorgenommen werden.

Konkret kann gemäß einer vorteilhaften Ausführungsform des erfindungsgemäßen Verfahrens vorgesehen sein, dass die Anlage ein elektrisches Energieversorgungsnetz, oder ein pneumatisches Netz, insbesondere ein Gas- oder Luftverteilnetz, oder ein hydraulisches Netz, insbesondere ein Wasser- oder Ölverteilnetz, oder ein Datennetz oder ein Informationsnetz oder ein Kommunikationsnetz oder ein Verkehrsnetz, insbesondere ein Straßenverkehrsnetz oder ein Schienennetz, ist.

Eine vorteilhafte Ausführungsform des erfindungsgemäßen Verfahrens sieht vor, dass die Zustandswerte direkt aus den Messwerten gebildet (Verwendung der Echtzeitwerte z.B. beim SCADA) oder unter Ausführung eines Zustandsschätzverfahrens (im Englischen auch als "State Estimation" bezeichnet), eines Lastflussberechnungsverfahrens, eines Lastflussprognoseverfahrens oder einer Kombination dieser Verfahren ermittelt werden.

Die Beobachtungsstellen können hierbei beispielsweise identisch mit den Messstellen sein oder sogar eine Untermenge davon bilden. In diesem Fall können die erfassten Messwerte ggf. direkt als Zustandswerte für die einzelnen Beobachtungsstellen übernommen werden (SCADA).

Durch Anwendung weiterer Verfahren (Zustandsschätzung, Lastflussberechnung, Lastflussprognose etc.) lassen sich die Zustandswerte besonders zuverlässig ermitteln. Hierzu finden beispielsweise Zustandsschätzverfahren und/oder Lastflussberechnungen unter Verwendung von die Anlage, z.B. ein Energieversorgungsnetz, möglichst genau nachbildenden mathematischen Modellbeschreibungen statt. Hierbei werden in Echtzeit die Messwerte sowie die Netztopologie beeinflussende Größen, wie z.B. Stellungen von Schaltern, Ventilen, Weichen und Transformatorstufenstellern, als Eingangsgrößen verwendet. Daneben können auch Lastprognosen, Lastflussoptimierungen, Ausfallvariantenberechnungen und/oder Kurzschlussstromberechnungen in die Ermittlung der Zustandswerte Eingang finden.

Es ist vorgesehen, dass eine grafische Repräsentation mit einer kreisförmigen Grundfläche erzeugt wird, deren Durchmesser von der Größe des jeweiligen Zustandswertes im Vergleich zum zugehörigen Zustandsschwellenwert abhängt.

Der Durchmesser einer solchen kreisförmigen grafischen Repräsentation nimmt somit - ab dem als Schwellenwertannäherung eingestellten Bereich - mit steigendem Wert des zugrundeliegenden Zustandswertes zu, so dass z.B. auf einen Blick eine drohende Schwellenwertverletzung von einer bereits stattgefundenen unterschieden oder die kritischste Schwellenwertverletzung (am größten Durchmesser der grafischen Repräsentation) erkannt werden kann. Die Beeinflussung der Größe der Grundfläche kann hierbei beispielsweise linear erfolgen. Es kann jedoch auf vorgesehen sein, dass eine Größenbeeinflussung erst infolge einer stattgefundenen Schwellenwertverletzung eintritt. In diesem Fall haben die kreisförmigen Grundflächen der grafischen Repräsentationen zunächst einen definierten Radius, damit die Anzeige generell gut erkennbar ist. Der Radius wird nur im Falle einer Schwellenwertverletzung vergrößert, um den Schweregrad der Verletzung anzuzeigen.

In diesem Zusammenhang kann zudem vorgesehen sein, dass der Wert des jeweiligen Zustandsschwellenwertes durch die grafische Repräsentation angegeben wird.

Dies kann z.B. als numerische Anzeige im Bereich der grafischen Repräsentation erfolgen. Besonders bevorzugt wird hierbei allerdings eine Darstellung, bei der der Schwellenwert grafisch in die Repräsentation integriert ist, z.B. indem er in Form einer Kreislinie mit dem entsprechenden Durchmesser in der grafischen Repräsentation hervorgehoben wird.

Gemäß einer weiteren vorteilhaften Ausführungsform des erfindungsgemäßen Verfahrens kann ferner vorgesehen sein, dass die grafische Repräsentation bei einer stattgefundenen Schwellenwertverletzung in Form eines dreidimensionalen Körpers angezeigt wird.

Somit kann noch einfacher - nämlich durch Unterscheidung von zweidimensionalen und dreidimensionalen Darstellungen der grafischen Repräsentation - eine Schwellenwertverletzung angezeigt werden. Bei der Anzeige der grafischen Repräsentation in dreidimensionaler Weise bietet es sich zudem an, auch die Netztopologie nicht in der Draufsicht, sondern in einer räumlichen Ansicht, z.B. aus einem schräg erhöht liegenden Blickwinkel, darzustellen, so dass sich die dreidimensionalen Körper besser in die Darstellung der Netzwerktopologie einfügen.

In diesem Zusammenhang kann zudem auch vorteilhaft vorgesehen sein, dass durch die grafische Repräsentation auch die Richtung der Schwellenwertverletzung angezeigt wird. Dies kann im Fall eines dreidimensionalen Körpers beispielsweise dadurch erfolgen, dass der Körper mit seiner Grundfläche in der Ebene der Netztopologiedarstellung liegt und seine Höhenachse sich entweder nach oben (bei Überschreitung eines oberen Grenzwertes) oder nach unten (bei Grenzwertunterschreitung eines unteren Grenzwertes) erstreckt. Auf diese Weise kann auch die Verletzung solcher Schwellenwerte differenziert angegeben werden, die einen nach oben und unten begrenzten Betriebsbereich der Anlagefestlegen (beispielsweise die Einhaltung eines vorgegebenen Spannungsbandes oder eines Druckbereiches).

Außerdem ist in diesem Zusammenhang gemäß einer weiteren vorteilhaften Ausführungsform des erfindungsgemäßen Verfahrens vorgesehen, dass die Länge einer Höhenachse der grafischen Repräsentation von der Größe des jeweiligen Zustandswertes im Vergleich zum zugehörigen Zustandsschwellenwert abhängt.

In diesem Fall wird die Schwere der Schwellenwertverletzung somit gleichsam durch die Höhe der grafischen Repräsentation angegeben.

Gemäß einer weiteren vorteilhaften Ausführungsform des erfindungsgemäßen Verfahrens kann zudem vorgesehen sein, dass eine Farbgebung und/oder eine Transparenz der grafischen Repräsentation von der Größe des jeweiligen Zustandswertes im Vergleich zum zugehörigen Zustandsschwellenwert und/oder von einer Zugehörigkeit der grafischen Repräsentation zu einer bestimmten Gruppe (z.B. Anlagenteilen mit gleichem Spannungs- oder Druckniveau) der jeweils zugehörigen Beobachtungsstelle in der Anlage abhängt.

Auf diese Weise können allein durch unterschiedliche Ausgestaltungen der visuellen Darstellung (Farbe, Transparenz) der grafischen Repräsentation dem Betriebspersonal in intuitiver Weise weitere Informationen über den Netzzustand übermittelt werden.

Gemäß einer weiteren vorteilhaften Ausführungsform des erfindungsgemäßen Verfahrens kann schließlich vorgesehen sein, dass, z.B. mittels eines Zustandsschätzverfahrens, einer Lastflussberechnung und/oder eine Lastflussprognose, auch Reservewerte ermittelt werden, die eine Regelreserve in der Anlage angeben, und der Wert der Reservewerte unter Berücksichtigung seiner Lage in der Anlage gemeinsam mit der Netzwerktopologie darstellt wird.

Konkret können hierbei beispielsweise bei einer Anlage in Form eines elektrischen Energieversorgungsnetzes die Reservewerte eine induktive und/oder kapazitive Regelreserve angeben.

Auf diese Weise kann dem Betriebspersonal der Netzleitstelle nicht nur die (drohende) Schwellenwertverletzung als solche angezeigt werden, vielmehr können auch durch die Anzeige von Regelreserven, die im Fall eines Energieversorgungsnetzes induktive oder kapazitive Regelreserven umfassen (z.B. die Größe der Kapazität einer zuschaltbaren Kondensatorbank oder eines zuschaltbaren induktiven Netzfilters), Möglichkeiten zur Eindämmung einer kritischen Situation aufgezeigt werden. Dadurch dass diese Regelreserven ebenfalls an der (geografisch und/oder funktional) korrekten Stelle in der Netztopologiedarstellung angezeigt werden, kann zudem durch die räumliche Nähe bestimmter Regelreserven zu einer Beobachtungsstelle mit einem kritischen Netzzustand eine Priorisierung möglicher Gegenmaßnahmen angezeigt werden.

Die oben genannte Aufgabe wird zudem auch durch eine Leitstelleneinrichtung zur Überwachung einer eine vernetzte Topologie aufweisenden Anlage gelöst, mit einer Messeingangseinrichtung, die zur Erfassung von einen Zustand der Anlage an verschiedenen Messstellen charakterisierenden Messwerten eingerichtet ist, einer Zustandsberechnungseinrichtung, die zur Ermittlung von Zustandswerten anhand der Messwerte eingerichtet ist, wobei die Zustandswerte einen elektrischen Zustand an vorgegebenen Zustandsbeobachtungsstellen der Anlage angeben, und einer Anzeigeeinrichtung, die zur visuellen Anzeige des Zustands der Anlage eingerichtet ist.

Erfindungsgemäß ist vorgesehen, dass die Leitstelleneinrichtung eine Auswerteeinrichtung umfasst, die zur Ausführung eines Verfahrens gemäß einem der Ansprüche 1 bis 10 eingerichtet ist. Hinsichtlich der erfindungsgemäßen Leitstelleneinrichtung gelten alle zu dem erfindungsgemäßen Verfahren voranstehend und nachfolgend gemachten Ausführungen und umgekehrt in entsprechender Weise, insbesondere ist die erfindungsgemäße Leitstelleneinrichtung zur Durchführung des erfindungsgemäßen Verfahrens in jeder beliebigen Ausführungsform oder einer Kombination beliebiger Ausführungsformen eingerichtet. Auch hinsichtlich der Vorteile der erfindungsgemäßen Einrichtung wird auf die zu dem erfindungsgemäßen Verfahren beschriebenen Vorteile verwiesen.

Die Erfindung wird nachfolgend anhand eines Ausführungsbeispiels näher erläutert. Die spezifische Ausgestaltung des Ausführungsbeispiels ist für die allgemeine Ausgestaltung des erfindungsgemäßen Verfahrens und der erfindungsgemäßen Leitstelleneinrichtung in keiner Weise einschränkend zu verstehen; vielmehr können einzelne Ausgestaltungsmerkmale des Ausführungsbeispiels in beliebiger Weise frei untereinander und mit den voranstehend beschriebenen Merkmalen kombiniert werden. Wie bereits voranstehend erwähnt, beziehen sich die nachfolgenden Ausführungsbeispiele beispielhaft auf eine Anlage in Form eines Energieversorgungsnetzes. Die Ausführungen können jedoch auch auf andere Anlagen mit vernetzter Topologie angewendet werden.

Es zeigen
- Figur 1: eine schematische Ansicht eines Systems mit einer Leitstelleneinrichtung zur Überwachung eines elektrischen Energieversorgungsnetzes;
- Figur 2: ein erstes Ausführungsbeispiel einer visuellen Anzeige eines Zustands eines Energieversorgungsnetzes mit grafischen Repräsentationen von kritischen Netzzuständen in zweidimensionaler Darstellung;
- Figuren 3-8: verschiedene Ausführungsbeispiele von grafischen Repräsentationen in zweidimensionaler Darstellung;
- Figur 9: ein zweites Ausführungsbeispiel einer visuellen Anzeige eines Zustands eines Energieversorgungsnetzes mit grafischen Repräsentationen von kritischen Netzzuständen in dreidimensionaler Darstellung;
- Figuren 10-11: verschiedene Ausführungsbeispiele von grafischen Repräsentationen in dreidimensionaler Darstellung; und
- Figur 12: ein drittes Ausführungsbeispiel einer visuellen Anzeige eines Zustands eines Energieversorgungsnetzes mit grafischen Repräsentationen von kritischen Netzzuständen und einer grafischen Darstellung von eine Regelreserve angebenden Reservewerten.

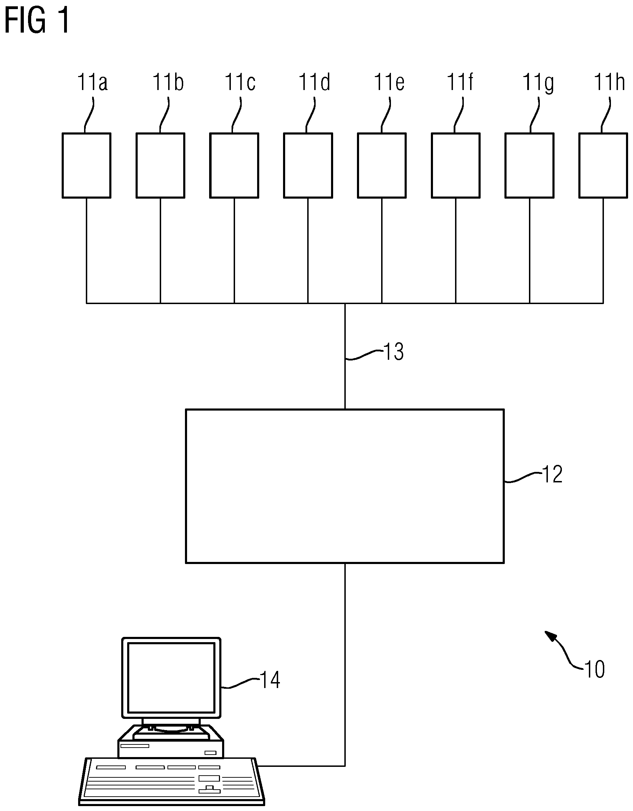

Figur 1 zeigt ein Überwachungssystem 10 für ein der Übersichtlichkeit halber selbst nicht dargestelltes elektrisches Energieversorgungsnetz. An unterschiedlichen Messstellen des elektrischen Energieversorgungsnetzes sind hierbei Messeinrichtungen 11a bis 11h angeordnet, mit denen einen Zustand des elektrischen Energieversorgungsnetzes an der jeweiligen Messstelle charakterisierende Messwerte aufgenommen werden können. Hierbei muss jedoch nicht zwingend jede Messeinrichtung an einer anderen Messstelle des elektrischen Energieversorgungsnetzes angeordnet sein; vielmehr ist es auch möglich, dass zwei Messeinrichtungen, beispielsweise die Messeinrichtungen 11a und 11b, an derselben Messstelle angeordnet sind und dort unterschiedliche Messgrößen, beispielsweise einerseits den Strom und andererseits die Spannung, erfassen und entsprechende Messwerte abgeben. Andere mit den Messeinrichtungen erfassbare für den Status des Energieversorgungsnetzes charakteristische Messgrößen können beispielsweise eine Leistung, eine Frequenz oder eine Temperatur sein.

Die Messeinrichtungen 11a bis 11h können hierbei bereits eine Vorverarbeitung der Messwerte vornehmen, indem beispielsweise eine Filterung und eine Analog-Digital-Umsetzung der Messwerte erfolgt. Bei einer solchen Analog-Digital-Umsetzung wird den entsprechenden digitalisierten Messwerten üblicherweise auch ein digitaler Zeitstempel zugeordnet, also eine Information, die eine für den einzelnen Messwert charakteristische Uhrzeit angibt (beispielsweise die Uhrzeit des Erfassungszeitpunkts des jeweiligen Messwertes). Alternativ können die Messeinrichtungen 11a bis 11h ihre Messwerte aber auch in analoger Form abgeben, so dass eine entsprechende Vorverarbeitung erst in einem späteren Schritt stattfindet.

Bei den Messeinrichtungen 11a bis 11h kann es sich z.B. um einzelne Wandlereinrichtungen und Sensoren oder um mehrere Messkanäle zusammenfassende Messgeräte, wie z.B. sogenannte Remote Terminal Units (RTUs) oder Merging Units (MUs) handeln. Es kann sich aber beispielsweise auch um Phasor-Messeinrichtungen bzw. Phasor Measurement Units (PMUs) handeln, die zur Erfassung von Zeigergrößen in elektrischen Energieversorgungsnetzen eingerichtet sind. Beispielsweise können mit Phasor-Messeinrichtungen mit hoher Abtastrate Stromzeigermesswerte und Spannungszeigermesswerte gemessen werden, die eine Information über Amplitude und Phasenwinkel des Stromes bzw. der Spannung zu dem jeweiligen Erfassungszeitpunkt beinhalten.

Die Anzahl der Messeinrichtungen ist selbstverständlich nicht, wie in Figur 1 lediglich beispielhaft dargestellt, auf acht beschränkt, vielmehr eignet sich das im Folgenden beschriebene Verfahren zur Überwachung eines elektrischen Energieversorgungsnetzes bei beliebig großen Anzahlen von Messeinrichtungen.

Die Messeinrichtungen 11a bis 11h sind über ein Kommunikationsmedium 13, beispielsweise über ein Kommunikationsnetzwerk oder einen Kommunikationsbus, mit einer Leitstelleneinrichtung 12 verbunden, bei der es sich beispielsweise um eine speziell eingerichtete Datenverarbeitungseinrichtung in einer Netzleitstelle zur Überwachung des elektrischen Energieversorgungsnetzes handeln kann.

Das Kommunikationsmedium 13 kann, wie in Figur 1 dargestellt, zur direkten Verbindung der Messeinrichtungen 11a bis 11h mit der Leitstelleneinrichtung 12 eingerichtet sein. Es ist jedoch im Rahmen der Erfindung durchaus auch möglich, ein Kommunikationsmedium mit mehreren Ebenen und dazwischen geschalteten kommunikationsfähigen Geräten zu verwenden. Bei solchen kommunikationsfähigen Geräten kann es sich beispielsweise um elektrischen Schutz- oder Leitgeräte in einer Unterstation des Energieversorgungsnetzes oder spezielle Kommunikationsgeräte wie z.B. Switches oder Hubs in einem Datenkommunikationsnetz handeln.

Mittels der Leitstelleneinrichtung 12 wird anhand der von den Messeinrichtungen 11a-h empfangenen Messwerte, die den Netzzustand lediglich an einigen Messstellen des Energieversorgungsnetzes angeben, der Zustand des ganzen Energieversorgungsnetzes ermittelt. Dazu werden für vorgegebene Beobachtungsstellen Zustandswerte berechnet, die den Zustand des Energieversorgungsnetzes an den Beobachtungsstellen angeben. Dies kann beispielsweise unter Ausführung eines Zustandsschätzverfahrens ("State Estimation"), eines Lastflussberechnungsverfahrens, eines Lastflussprognoseverfahrens oder einer Kombination dieser Verfahren erfolgen. Durch Anwendung solcher Verfahren lassen sich die Zustandswerte besonders zuverlässig ermitteln. Hierzu finden beispielsweise Zustandsschätzverfahren und/oder Lastflussberechnungen unter Verwendung von das Energieversorgungsnetz möglichst genau nachbildenden mathematischen Modellbeschreibungen statt. Hierbei werden in Echtzeit die Messwerte sowie die Netztopologie beeinflussende Größen, wie Stellungen von Schaltern und Transformatorstufenstellern, als Eingangsgrößen verwendet. Daneben können auch Lastprognosen, Lastflussoptimierungen, Ausfallvariantenberechnungen und/oder Kurzschlussstromberechnungen in die Ermittlung der Zustandswerte Eingang finden. Die Beobachtungsstellen können aber beispielsweise auch identisch mit den Messstellen sein oder sogar eine Untermenge davon bilden. In diesem Fall können die erfassten Messwerte ggf. direkt als Zustandswerte für die einzelnen Beobachtungsstellen übernommen werden.

Als Ergebnis dieser Ermittlung liegen Zustandswerte für die vorgegebenen Zustandsbeobachtungsstellen (im Folgenden auch kurz als "Beobachtungsstellen" bezeichnet) des Energieversorgungsnetzes vor, die einen aktuellen und/oder einen erwarteten Zustand des Energieversorgungsnetzes an den Beobachtungsstellen beschreiben. Üblicherweise wird die Anzahl der Beobachtungsstellen größer sein als die Anzahl der tatsächlich im Energieversorgungsnetz vorhandenen Messstellen. Dabei können im Extremfall alle Punkte des Energieversorgungsnetzes als Beobachtungsstellen vorgegeben sein, in diesem Fall würde der Netzzustand quasi an jedem beliebigen Punkt des Energieversorgungsnetzes durch entsprechende Zustandswerte beschrieben. Üblicherweise werden als Beobachtungsstellen jedoch bestimmte kritische Stellen im Energieversorgungsnetz, z.B. einzelne Sammelschienen, Transformatorstationen, Netzabgänge etc., ausgewählt, an denen der Zustand des Energieversorgungsnetzes überwacht wird.

Aus den Zustandswerten generiert die Leitstelleneinrichtung 12 mittels einer in Figur 1 nicht explizit gezeigten Auswerteeinrichtung daraufhin eine visuelle Anzeige, die dem Betriebspersonal des Energieversorgungsnetzes mittels einer Anzeigeeinrichtung 14, bei der es sich um einen Monitor der Leitstelleneinrichtung, um eine separate Datenverarbeitungseinrichtung, wie z.B. eine Workstation, oder um spezielle für Netzleitstellen ausgelegte Großflächenanzeigen handeln kann, zur Anzeige gebracht wird.

Für das Betriebspersonal wesentliche Informationen bei der Darstellung des Netzzustandes, zum Beispiel von Schwellenwertverletzungen im Spannungsband ("Voltage Violations") sind hierbei beispielsweise die folgenden:
- eine (geographische) Position eines kritischen Zustands im Energieversorgungsnetz;
- wurde bereits ein Schwellenwert überschritten (ja/nein)?
- welcher Schwellenwert wurde überschritten?
- wurde ein oberer Schwellenwert (z.B. "High Voltage Violation") oder ein unterer Schwellenwert (z.B. "Low Voltage Violation") verletzt?
- Schweregrad der Verletzung (wie groß ist die Abweichung vom Sollwert?)
- auf welcher Spannungsebene ("Voltage Level") hat eine Verletzung stattgefunden?

Um dem Betriebspersonal insgesamt eine möglichst übersichtliche und intuitiv verständliche Anzeige des Netzzustands zur Verfügung zu stellen, werden von der Auswerteeinrichtung der Leitstelleneinrichtung 12 für zumindest ausgewählte der Beobachtungsstellen Zustandsschwellenwerte bereitgestellt, die einen zulässigen Betriebsbereich des Energieversorgungsnetzes an der jeweiligen Zustandsbeobachtungsstelle begrenzen. Die für die ausgewählten Zustandsbeobachtungsstellen ermittelten Zustandswerte werden mit den zugehörigen Zustandsschwellenwerten verglichen. Dann wird ausschließlich für diejenigen Zustandswerte, bei denen eine bereits stattgefundene oder eine drohende Verletzung des zugehörigen Zustandsschwellenwertes erkannt wird, von der Leitstelleneinrichtung 12 eine grafische Repräsentation erzeugt.

Ab wann ein Zustandswert als ein solcher, der eine drohende Schwellenwertverletzung anzeigt, erkannt werden soll, kann in der Konfiguration der Leitstelleneinrichtung 12 als Parametereinstellung vorgegeben werden. Beispielsweise kann eine Annäherung auf ≤ 10% an den jeweiligen Zustandsschwellenwert als drohende Schwellenwertverletzung angesehen werden; andere Einstellungen sind jedoch ebenfalls möglich. Auch können für unterschiedliche Zustandsgrößen und/oder Beobachtungsstellen unterschiedliche Einstellungen vorgenommen werden.

Mit der Leitstelleneinrichtung 12 wird auch eine visuelle Anzeige einer Netzwerktopologie des Energieversorgungsnetzes, bei der es sich beispielsweise um einen funktionalen oder einen geografischen Netzplan handeln kann, erzeugt und mittels der Anzeigeeinrichtung 14 angezeigt.

Zumindest denjenigen Zustandswerten, für die eine grafische Repräsentation erzeugt wird, wird jeweils eine die Lage ihrer jeweiligen Zustandsbeobachtungsstelle im Energieversorgungsnetz angebende Ortsinformation zugeordnet und die jeweilige grafische Repräsentation wird unter Verwendung der Ortsinformation jeweils an derjenigen Stelle der angezeigten Netzwerktopologie dargestellt, die ihrer Lage im Energieversorgungsnetz entspricht.

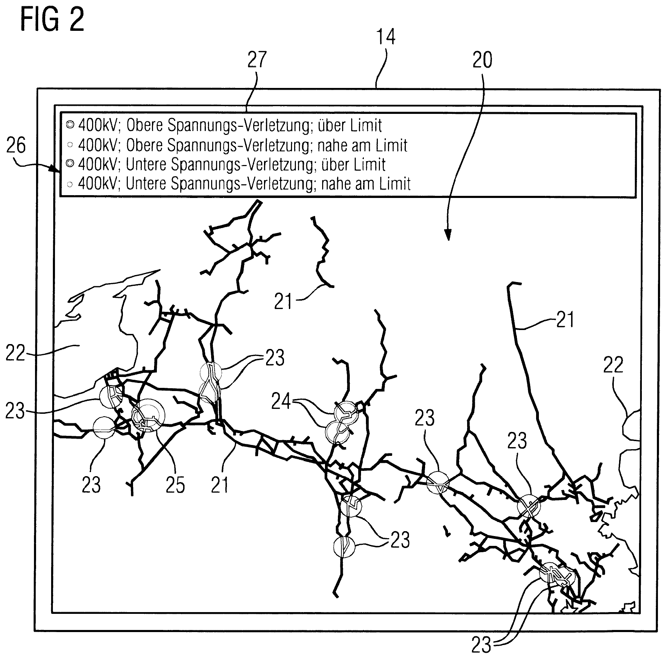

Figur 2 zeigt in diesem Zusammenhang ein erstes Beispiel einer mittels der Anzeigeeinrichtung 14 dargestellten visuellen Anzeige des Zustands des Energieversorgungsnetzes.

In einem Hauptanzeigebereich 20 ist hierbei beispielhaft eine Netzwerktopologie in Form eines geografisch strukturierten Netzplans mit Energieversorgungsleitungen 21 des Energieversorgungsnetzes gezeigt. Die Netzwerktopologie gibt neben einem geografischen Verlauf der Energieversorgungsleitungen 21 auch (elektrische) Verbindungen der Energieversorgungsleitungen durch Knotenpunkte an. Zur Unterstützung der geografischen Orientierung können dem Betriebspersonal darüber hinaus auch wesentliche Landschaftsmerkmale, wie z.B. Gewässer 22, der Verlauf von Hauptverkehrswegen (z.B. Autobahnen, Bahnlinien) oder Stadtgrenzen, angezeigt werden.

Zusätzlich zur Anzeige der Netzwerktopologie werden mittels der Anzeigeeinrichtung 14 auch grafische Repräsentationen 23, 24, 25 dargestellt, die die kritischen Zustände im Energieversorgungsnetz an den entsprechenden Beobachtungsstellen angeben. Kritische Zustände geben Zustände des Energieversorgungsnetzes an, die außerhalb seines gewünschten Betriebsbereiches liegen, und können beispielsweise durch Spannungen und/oder Frequenzen, die außerhalb eines vorgegebenen Spannungs- bzw. Frequenzbandes liegen, überhöhte Ströme und/oder Temperaturen oder Leistungsabweichungen gegeben sein.

Der besondere Vorteil dieser Form der visuellen Anzeige besteht darin, dass auf einer die Topologie des Energieversorgungsnetzes angebenden visuellen Darstellung dem Betriebspersonal ausschließlich diejenigen Netzzustände angezeigt werden, die einen - sich androhenden oder bereits stattgefundenen - kritischen Betriebszustand des Energieversorgungsnetzes angeben. Da die Anzeige in Form der grafischen Repräsentation neben der Tatsache, dass ein kritischer Zustand vorliegt, auch dessen Lage im Energieversorgungsnetz anzeigt, kann das Betriebspersonal sehr schnell und intuitiv den Zustand des Energieversorgungsnetzes erfassen und gegebenenfalls Gegenmaßnahmen ergreifen, um einen kritischen Netzzustand einzudämmen. Dabei kann die Visualisierung der grafischen Repräsentation entweder direkt in die Ebene der Netzwerktopologie integriert oder als separate Ebene ("Layer") darübergelegt werden. Bei der Verwendung von grafischen Ebenen kann zudem vorgesehen sein, dass mehrere übereinanderliegende Ebenen zur Anzeige der Zustandsgrößen und/oder Schwellwertannäherungen bzw. -verletzungen verwendet werden können. Dabei können Informationen unterschiedlichen Typs auch verschiedene Ebenen zugeordnet werden. Bei Bedarf kann eine Anpassung und/oder ein Ein- bzw. Ausblenden verschiedener Ebenen durch das Betriebspersonal ermöglicht werden, so dass in einfacher Weise Zusammenhänge, Koinzidenzen bzw. Korrelationen erkennbar gemacht werden können. Hierbei wird es zudem als vorteilhaft angesehen, wenn die Darstellung der Netzwerktopologie in zurückhaltender Farbgebung (z.B. in Graustufen) erfolgt, um das Augenmerk des Betriebspersonals nicht von der Darstellung der die kritischen Zustände angebenden grafischen Repräsentationen abzulenken. Optional kann der Grad der zurückhaltenden Darstellung vom Anwender variiert werden (z.B. stufenweise oder nahtlose Einstellung eines Übergangs von Graustufen zu einer Farbdarstellung).

Schwellenwertverletzungen sowie angehende Schwellenwertverletzungen können auf diese Weise einfach identifiziert und dem Betriebspersonal zur Anzeige gebracht werden. Dabei findet eine Fokussierung der angezeigten Informationen auf die tatsächlich kritischen Stellen statt, so dass für das Betriebspersonal eine schnelle und einfach verständliche Darstellung erzeugt werden kann. Die Fokussierung der Informationen besteht hierbei insbesondere aus der Beschränkung auf tatsächlich relevante Informationen wie das Hervorheben bzw. Betonen von topologischen Informationen (z.B. Leitungen), die einen Bezug zum betroffenen Netzabschnitt haben. Außerdem kann auch eine Darstellung von numerischen Werten (z.B. Höhe der Schwellenwertverletzung in Prozent) angegeben werden. Die Anzeige kann zudem auch durch Auswahl der Art der Information (z.B. Wirkleistung, Blindleistung, Spannungsebene, Netzbereich, Kritikalität der Schwellenwertverletzung - z.B. mehr als 20% über dem Schwellenwert) manuell weiter gefiltert werden, um eine noch größere Verdichtung der relevanten Informationen zu erreichen.

Die grafischen Repräsentationen 23, 24 ,25 werden gemäß dem Beispiel in Figur 2 als zweidimensionale Objekte mit kreisförmiger Grundfläche gemeinsam mit einer Draufsicht auf die Netzwerktopologie dargestellt. Sie lassen insbesondere Rückschlüsse auf folgende Informationen zu:
Es wird die (geografische und/oder funktionale) Stelle im Energieversorgungsnetz angegeben, an der ein kritischer Zustand vorliegt. Diese Information wird durch die mittels der Ortsinformation erzeugte Lage der grafischen Repräsentation im Verhältnis zur Darstellung der Netzwerktopologie gegeben.

Die Größe des der grafischen Repräsentation zugrunde liegenden Zustandswertes beeinflusst den Durchmesser der kreisförmigen Grundfläche der grafischen Repräsentation. Hierdurch kann beispielsweise erkannt werden, dass die grafische Repräsentation 25 die kritischste Stelle im Energieversorgungsnetz gemäß der Figur 2 angibt. Die Beeinflussung der Größe der Grundfläche kann hierbei beispielsweise linear erfolgen. Es kann jedoch auf vorgesehen sein, dass eine Größenbeeinflussung erst infolge einer stattgefundenen Schwellenwertverletzung eintritt. In diesem Fall haben die kreisförmigen Grundflächen der grafischen Repräsentationen zunächst einen definierten Radius, damit die Anzeige generell gut erkennbar ist. Der Radius wird nur im Falle einer Schwellenwertverletzung vergrößert, um den Schweregrad der Verletzung anzuzeigen.

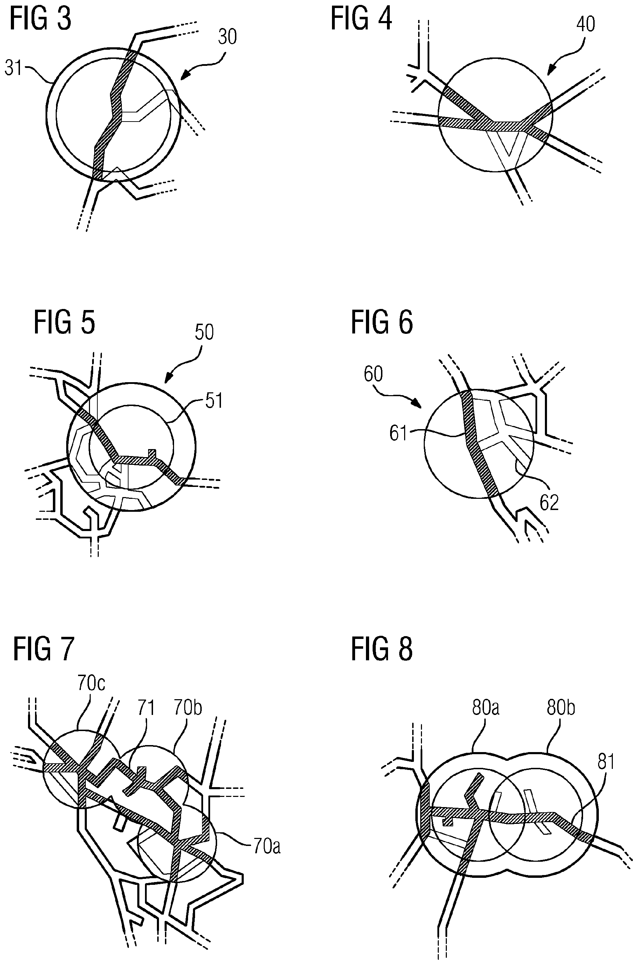

Zudem kann angezeigt werden, ob bereits ein Zustandsschwellenwert überschritten wurde. Diese Information kann durch die gleichzeitige grafische Anzeige des Schwellenwertes, beispielsweise durch einen Ring in der grafischen Repräsentation mit demjenigen Durchmesser, der dem Wert des Zustandsschwellenwertes entspricht, gegeben werden. Dies wird in Figuren 3, 4 und 5 verdeutlicht. Figur 3 zeigt hierbei einen Ausschnitt einer Netzwerktopologie mit einer grafischen Repräsentation 30, bei der der Zustandsschwellenwert in Form eines Ringes 31 mit entsprechendem Durchmesser angezeigt wird. Wie Figur 3 leicht entnommen werden kann, wurde der durch den Ring 31 angedeutete Zustandsschwellenwert bereits überschritten (analog zu den grafischen Repräsentationen 24 in Figur 2). Figur 4 zeigt hingegen einen Ausschnitt einer Netzwerktopologie mit einer grafischen Repräsentation 40, bei der der Zustandsschwellenwert noch nicht überschritten ist (analog zu den grafischen Repräsentationen 23 in Figur 2). Im Beispiel der Figur 4 wird der Zustandsschwellenwert in diesem Fall auch nicht in der grafischen Repräsentation angezeigt. Alternativ könnte jedoch auch eine Anzeige entsprechend dem Beispiel aus Figur 3 erfolgen, wobei in diesem Fall jedoch der Durchmesser des Teils der grafischen Repräsentation, der den Zustandswert angibt (Kreis) kleiner als der Durchmesser des den Zustandsschwellenwert angebenden Rings sein müsste. Figur 5 zeigt einen Ausschnitt einer Netzwerktopologie mit einer grafischen Repräsentation 50, bei der der Zustandsschwellenwert in Form eines Ringes 51 mit entsprechendem Durchmesser angezeigt wird. Wie Figur 5 im Vergleich zu Figur 3 leicht entnommen werden kann, wurde der durch den Ring 51 angedeutete Zustandsschwellenwert bereits überschritten, wobei die Überschreitung ein größeres Maß angenommen hat als die in Figur 3 angedeutete Überschreitung (analog zur grafischen Repräsentation 25 in Figur 2).

Weitere Hinweise auf die Kritikalität eines Zustands können darüber hinaus auch durch eine Farbgebung und/oder eine Transparenz der Darstellung der grafischen Repräsentation gegeben werden. Außerdem kann durch unterschiedliche Farbgebung der grafischen Repräsentationen beispielsweise auf die Zugehörigkeit zu bestimmten Spannungsebenen (z.B. 400kV, 240kV, 120kV) hingewiesen werden. Abstufungen in der Farbgebung können zudem auf die Schwere der (drohenden) Schwellenwertüberschreitung sowie (bei durch einen oberen und einen unteren Schwellenwert begrenzten erlaubten Bereichen der Zustandsgröße) auf die Richtung der Verletzung (Überschreitung eines oberen Schwellenwertes oder Unterschreitung eines unteren Schwellenwertes) hindeuten.

Für den Fall einer Farbcodierung der grafischen Repräsentationen kann generell eine Legende in einem Informationsdarstellungsbereich 27 der visuellen Anzeige vorgesehen sein (vgl. Figur 2).

Daneben können auch durch Hervorhebung der von dem kritischen Zustand betroffenen Leitungen Hinweise auf die Ursache eines kritischen Zustands gegeben werden. Hierzu zeigt beispielsweise Figur 6 zeigt einen Ausschnitt einer Netzwerktopologie mit einer grafischen Repräsentation 60. Zusätzlich ist eine Energieversorgungsleitung 61 visuell als von dem kritischen Zustand betroffen markiert, während andere Energieversorgungsleitungen 62 visuell nicht markiert werden, da sie nicht von dem kritischen Zustand betroffen sind. Hierdurch kann die Suche nach der Ursache des kritischen Zustands erleichtert werden.

Wie Figuren 7 und 8 entnommen werden kann, können sich die grafischen Repräsentationen auch überlagern bzw. überschneiden und damit neue Formen bilden. Durch diese visuelle Anhäufung wird das Betriebspersonal noch stärker darauf hingewiesen, dass ein größerer Abschnitt des Energieversorgungsnetzes Probleme aufweist. Figur 7 zeigt hierzu drei sich überlagernde grafische Repräsentationen 70a-c, die entlang einer Energieversorgungsleitung 71 eine sich androhende Schwellenwertverletzung anzeigen. Figur 8 zeigt zwei sich überlagernde grafische Repräsentationen 80a-b, die entlang einer Energieversorgungsleitung 81 eine bereits stattgefundene Schwellenwertverletzung anzeigen.

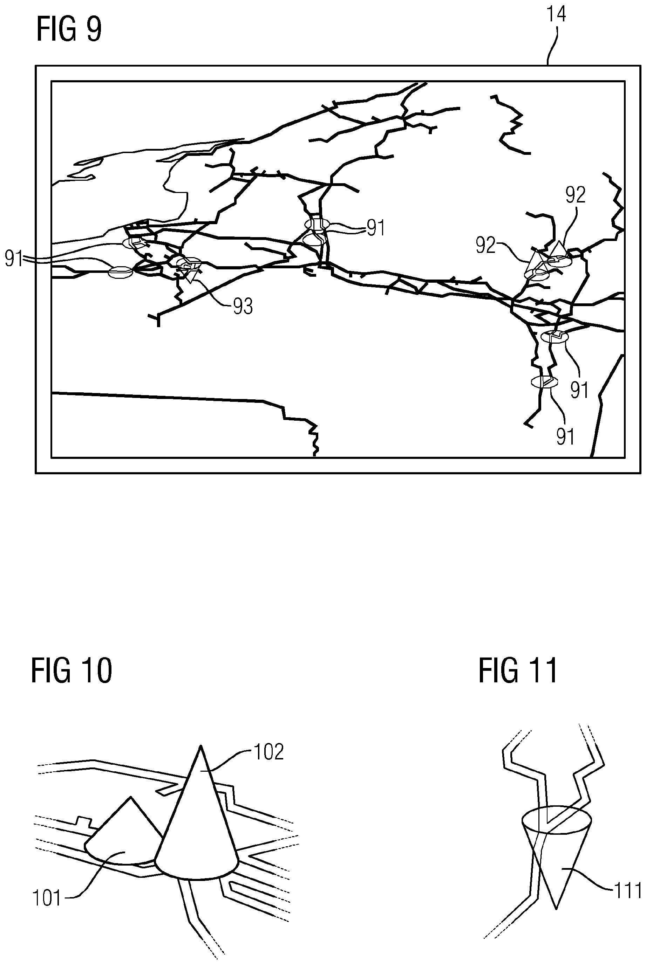

Figur 9 zeigt ein zweites Ausführungsbeispiel einer visuellen Anzeige des Zustands des Energieversorgungsnetzes mit der Anzeigeeinrichtung 14. Der wesentliche Unterschied zur Darstellung gemäß Figur 2 liegt darin, dass für die visuelle Anzeige nunmehr eine dreidimensionale Darstellung gewählt ist. Dabei wird die Netzwerktopologie aus einem schräg erhöht liegenden Blickwinkel in räumlicher Weise angezeigt. Die grafischen Repräsentationen 91, 92, 93 geben hierbei kritische Netzzustände an den zugehörigen Positionen im Energieversorgungsnetz an. Dabei stellen die weiterhin zweidimensional angezeigten grafischen Repräsentationen 91 solche Netzzustände dar, bei denen noch keine Schwellenwertverletzung stattgefunden hat, sich aber eine solche androht. Die in der Draufsicht kreisförmige Grundfläche der grafischen Repräsentationen 91 wurde hierbei zur besseren Einfügung in die räumliche Ansicht gemäß Figur 9 in eine Ellipsenform geändert.

Die grafischen Repräsentationen 92 und 93 sind hingegen als dreidimensionale Körper (hier konkret als Kegel) dargestellt. Ihre Ausrichtung nach oben bzw. nach unten von den Ebene der Netzwerktopologie aus gesehen deutet eine Verletzung eines oberen (vgl. auch grafische Repräsentationen 101 und 102 in Figur 10) bzw. eines unteren (vgl. auch grafische Repräsentation 111 in Figur 11) Schwellenwertes an. Wie außerdem Figur 10 leicht entnommen werden kann, kann durch die Länge der Höhenachse der jeweiligen als dreidimensionaler Körper angezeigten grafischen Repräsentation auch eine Größe des zugrundeliegenden Zustandswertes bzw. eine Kritikalität der Schwellenwertverletzung angezeigt werden. So deutet in Figur 10 eine grafische Repräsentation 101 mit kleiner Höhenachse auf eine geringere Schwellenwertverletzung hin als eine grafische Repräsentation 102 mit im Vergleich größerer Höhenachse.

Durch unterschiedliche Farbgebungen der grafischen Repräsentationen 91, 92, 93 können weiterhin die Spannungsebenen angezeigt werden.

Das Betriebspersonal kann optional die Möglichkeit haben, durch Beeinflussung einer entsprechenden Einstellung der Leitstelleneinrichtung 12 zwischen der zweidimensionalen und der dreidimensionalen Anzeige umzuschalten und ggf. auch den Blickwinkel zu verändern.

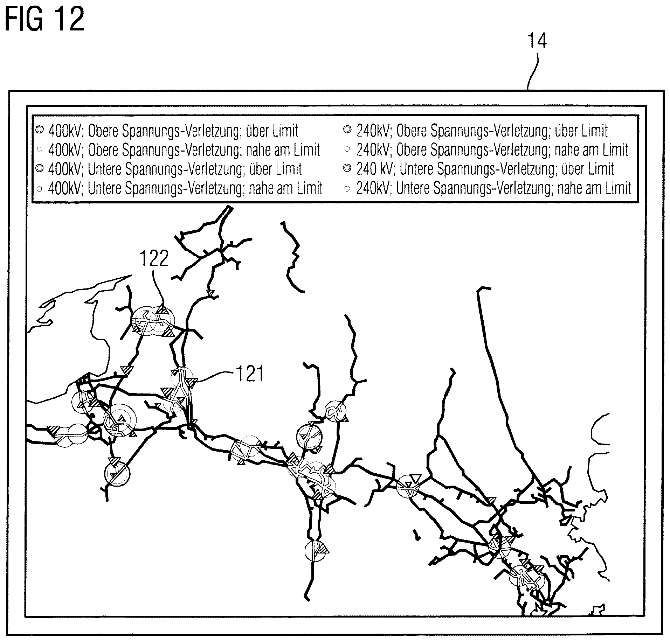

Figur 12 zeigt schließlich ein drittes Ausführungsbeispiel der Anzeige eines Zustands des elektrischen Energieversorgungsnetzes mit der Anzeigeeinrichtung 14.

In dem Beispiel der Figur 12 werden neben den bereits beschriebenen grafischen Repräsentationen kritischer Netzzustände auch Reservewerte dargestellt, die eine induktive und/oder kapazitive Regelreserve im Energieversorgungsnetz angeben. In Figur 12 werden diese lediglich beispielhaft grafisch als Dreiecke 121 und 122 dargestellt, wobei die Ausrichtung des Dreiecks auf die Art der Regelreserve (induktiv oder kapazitiv) hindeutet. Beispielsweise deutet ein nach oben gerichtetes Dreieck 122 auf eine induktive, ein nach unten gerichtetes Dreieck 121 auf eine kapazitive Regelreserve hin. Die Anzeige der Reservewerte kann hierbei auf derselben Anzeigeebene wie die Anzeige der grafischen Repräsentationen oder einer oder mehreren anderen Anzeigeebene(n) ("Layer") stattfinden. Die zusätzliche Anzeige der Reservewerte gibt dem Betriebspersonal wertvolle Hinweise auf mögliche Handlungsspielräume, um eine (drohende) Schwellenwertverletzung zu beheben.

Die Anzeige der Reservewerte kann hierbei sowohl in der zweidimensionalen Darstellung (wie in Figur 12 gezeigt) oder der dreidimensionalen Darstellung erfolgen.

Die in den Figuren 2 bis 12 beschriebenen Arten der visuellen Darstellung können optional durch weitere Interaktionsmöglichkeiten des Betriebspersonals unterstützt werden:
Es können beispielsweise einzelne Spannungsebenen ein- und ausgeblendet werden, so dass bestimmte Zusammenhänge hinsichtlich eines Netzzustands einfach erkannt werden können.
Es können alle oder ausgewählte Visualisierungen von grafischen Repräsentationen und ggf. Reservewerten ein- und ausgeblendet werden. Die Darstellungsart der Netzwerktopologie im Hintergrund kann angepasst werden (auffälliger bzw. unauffälliger). Innerhalb der visuellen Anzeige kann mit üblichen Navigationsmechanismen (wie Zoomen und Verschieben) navigiert werden. Es kann ein Wechsel von der 2D- zur 3D-Sicht und umgekehrt stattfinden. Durch direktes Anklicken der grafischen Repräsentationen und ggf. der Reservewerte können relevante Detailinformationen (z.B. detaillierte Werte der zugehörigen Messwerte, Zustandswerte und Zustandsschwellenwerte) angezeigt werden.

## Patentansprüche

1. Verfahren zum Überwachen einer eine vernetzte Topologie aufweisenden Anlage, bei dem
- an einer Mehrzahl von Messstellen der Anlage einen Zustand der Anlage an der jeweiligen Messstelle charakterisierende Messwerte erfasst werden;
- die erfassten Messwerte an eine Leitstelleneinrichtung (12) übermittelt werden, die anhand der Messwerte Zustandswerte ermittelt, die einen Zustand an vorgegebenen Zustandsbeobachtungsstellen der Anlage angeben; und
- die Zustandswerte zur Erzeugung einer visuellen Anzeige des Zustands der Anlage verwendet werden;
- von der Leitstelleneinrichtung (12) für zumindest ausgewählte der Zustandsbeobachtungsstellen Zustandsschwellenwerte bereitgestellt werden, die einen zulässigen Betriebsbereich der Anlage an der jeweiligen Zustandsbeobachtungsstelle begrenzen;
- die für die ausgewählten Zustandsbeobachtungsstellen ermittelten Zustandswerte mit den zugehörigen Zustandsschwellenwerten verglichen werden;
- von der Leitstelleneinrichtung (12) eine Repräsentation (23, 24, 25, 91, 92, 93) erzeugt wird;
- mit der Leitstelleneinrichtung (12) auch eine visuelle Anzeige einer Netzwerktopologie der Anlage erzeugt und mittels einer Anzeigeeinrichtung (13) angezeigt wird;
- zumindest den Zustandswerten, für die eine grafische Repräsentation erzeugt wird, jeweils eine die Lage ihrer jeweiligen Zustandsbeobachtungsstelle in der Anlage angebende Ortsinformation zugeordnet wird; und
- die jeweilige grafische Repräsentation (23, 24, 25, 91, 92, 93) unter Verwendung der Ortsinformation jeweils an derjenigen Stelle der angezeigten Netzwerktopologie dargestellt wird, die ihrer Lage in der Anlage entspricht,
**dadurch gekennzeichnet, dass**
die Repräsentation grafisch ist, und dass
die Repräsentation ausschließlich für diejenigen Zustandswerte erzeugt wird, bei denen eine bereits stattgefundene oder eine drohende Verletzung des zugehörigen Zustandsschwellenwertes erkannt wird, und dass
- die grafische Repräsentation (23, 24, 25) mit einer kreisförmigen oder ellipsenförmigen Grundfläche erzeugt wird, deren Durchmesser von der Größe des jeweiligen Zustandswertes im Vergleich zum zugehörigen Zustandsschwellenwert abhängt.

2. Verfahren nach Anspruch 1,
**dadurch gekennzeichnet, dass** die Anlage
- ein elektrisches Energieversorgungsnetz, oder
- ein pneumatisches Netz, insbesondere ein Gas- oder Luftverteilnetz, oder
- ein hydraulisches Netz, insbesondere ein Wasser- oder Ölverteilnetz, oder
- ein Datennetz oder
- ein Informationsnetz oder
- ein Kommunikationsnetz oder
- ein Verkehrsnetz, insbesondere ein Straßenverkehrsnetz oder ein Schienennetz,
ist.

3. Verfahren nach Anspruch 1 oder 2,
**dadurch gekennzeichnet, dass**
- die Zustandswerte direkt aus den Messwerten gebildet oder unter Ausführung eines Zustandsschätzverfahrens, eines Lastflussberechnungsverfahrens, eines Lastflussprognoseverfahrens oder einer Kombination dieser Verfahren ermittelt werden.

4. Verfahren nach Anspruch 3,
**dadurch gekennzeichnet, dass**
- der Wert des jeweiligen Zustandsschwellenwertes durch die grafische Repräsentation angegeben (23, 24, 25) wird.

5. Verfahren nach einem der vorangehenden Ansprüche,
- die grafische Repräsentation (91, 92, 93) bei einer stattgefundenen Schwellenwertverletzung in Form eines dreidimensionalen Körpers angezeigt wird.

6. Verfahren nach Anspruch 5,
**dadurch gekennzeichnet, dass**
- durch die grafische Repräsentation (91, 92, 93) auch die Richtung der Schwellenwertverletzung angezeigt wird.

7. Verfahren nach Anspruch 5 oder 6,
**dadurch gekennzeichnet, dass**
- die Länge einer Höhenachse der grafischen Repräsentation (91, 92, 93) von der Größe des jeweiligen Zustandswertes im Vergleich zum zugehörigen Zustandsschwellenwert abhängt.

8. Verfahren nach einem der vorangehenden Ansprüche,
**dadurch gekennzeichnet, dass**
- eine Farbgebung und/oder eine Transparenz der grafischen Repräsentation (23, 24, 25, 91, 92, 93) von der Größe des jeweiligen Zustandswertes im Vergleich zum zugehörigen Zustandsschwellenwert und/oder von einer Zugehörigkeit der grafischen Repräsentation (23, 24, 25, 91, 92, 93) zu einer bestimmten Gruppe der jeweils zugehörigen Beobachtungsstelle in der Anlageabhängt.

9. Verfahren nach einem der vorangehenden Ansprüche,
**dadurch gekennzeichnet, dass**
- auch Reservewerte ermittelt werden, die eine Regelreserve in der Anlage angeben; und
- der Wert der Reservewerte unter Berücksichtigung seiner Lage in der Anlagegemeinsam mit der Netzwerktopologie darstellt wird.

10. Verfahren nach Anspruch 9,
**dadurch gekennzeichnet, dass**
- bei einer Anlage in Form eines elektrischen Energieversorgungsnetzes die Reservewerte eine induktive und/oder kapazitive Regelreserve angeben.

11. Leitstelleneinrichtung (12) zur Überwachung einer eine vernetzte Topologie aufweisenden Anlage mit
- einer Messeingangseinrichtung, die zur Erfassung von einen Zustand der Anlage an verschiedenen Messstellen charakterisierenden Messwerten eingerichtet ist;
- einer Zustandsberechnungseinrichtung, die zur Ermittlung von Zustandswerten anhand der Messwerte eingerichtet ist, wobei die Zustandswerte einen elektrischen Zustand an vorgegebenen Zustandsbeobachtungsstellen der Anlage angeben; und
- einer Anzeigeeinrichtung (14), die zur visuellen Anzeige des Zustands der Anlage eingerichtet ist;
**dadurch gekennzeichnet, dass**
- die Leitstelleneinrichtung eine Auswerteeinrichtung umfasst, die zur Ausführung eines Verfahrens gemäß einem der Ansprüche 1 bis 10 eingerichtet ist.

## Claims

1. Method for monitoring an installation having a network topology, in which
- a plurality of measuring points of the installation are used to capture measured values characterizing a state of the installation at the respective measuring point;
- the captured measured values are transmitted to a supervisory control device (12) that uses the measured values to ascertain state values that indicate a state at prescribed state observation points of the installation; and
- the state values are used to produce a visual display of the state of the installation;
- the supervisory control device (12) provides state threshold values for at least selected instances of the state observation points, which state threshold values delimit an admissible operating area for the installation and the respective state observation point;
- the state values ascertained for the selected state observation points are compared with the associated state threshold values;
- the supervisory control device (12) produces a representation (23, 24, 25, 91, 92, 93);
- the supervisory control device (12) is also used to produce a visual display of a network topology of the installation and to display it by means of a display device (13);
- at least the state values for which a graphical representation is produced are each assigned a piece of location information indicating the position of their respective state observation point in the installation; and
- the respective graphical representation (23, 24, 25, 91, 92, 93) is presented, using the location information, at that respective point of the displayed network topology that corresponds to its position in the installation,
**characterized in that**
the representation is graphical, and **in that** the representation is produced exclusively for those state values for which a violation of the associated state threshold value that has already taken place or is imminent is identified, and **in that**
- the graphical representation (23, 24, 25) having a circular or elliptical base area, the diameter of which is dependent on the magnitude of the respective state value in comparison with the associated state threshold value, is produced.

2. Method according to Claim 1,
**characterized in that**
the installation is
- an electrical power supply system, or
- a pneumatic network, particularly a gas or air distribution network, or
- a hydraulic network, particularly a water or oil distribution network, or
- a data network or
- an information network or
- a communication network or
- a transport network, particularly a road transport network or a rail network.

3. Method according to Claim 1 or 2,
**characterized in that**
- the state values are formed directly from the measured values or are ascertained by carrying out a state estimation method, a load flow computation method, a load flow forecast method or a combination of these methods.

4. Method according to Claim 3,
**characterized in that**
- the value of the respective state threshold value is indicated by the graphical representation (23, 24, 25).

5. Method according to one of the preceding claims,
**characterized in that**
- the graphical representation (91, 92, 93) is displayed in the form of a three-dimensional body when a threshold value violation has taken place.

6. Method according to Claim 5,
**characterized in that**
- the graphical representation (91, 92, 93) also displays the direction of the threshold value violation.

7. Method according to Claim 5 or 6,
**characterized in that**
- the length of a height axis of the graphical representation (91, 92, 93) is dependent on the magnitude of the respective state value in comparison with the associated state threshold value.

8. Method according to one of the preceding claims,
**characterized in that**
- a coloration and/or a transparency of the graphical representation (23, 24, 25, 91, 92, 93) is/are dependent on the magnitude of the respective state value in comparison with the associated state threshold value and/or on an association of the graphical representation (23, 24, 25, 91, 92, 93) with a particular group of the respective associated observation point in the installation.

9. Method according to one of the preceding claims,
**characterized in that**
- reserve values that indicate a control reserve in the installation are also ascertained; and
- the value of the reserve values is presented by taking account of its position in the installation, together with the network topology.

10. Method according to Claim 9,
**characterized in that**
- for an installation in the form of an electrical power supply system, the reserve values indicate an inductive and/or capacitive control reserve.

11. Supervisory control device (12) for monitoring an installation having a networked topology, having
- a measuring input device that is set up to capture measured values that characterize a state of the installation at different measuring points;
- a state computation device that is set up to ascertain state values on the basis of the measured values, wherein the state values indicate an electrical state at prescribed state observation points of the installation; and
- a display device (14) that is set up to visually display the state of the installation;
**characterized in that**
- the supervisory control device comprises an evaluation device that is set up to carry out a method according to one of Claims 1 to 10.

## Revendications

1. Procédé de contrôle d'une installation ayant une topologie réticulée, dans lequel
- on relève, en une pluralité de points de mesure de l'installation, des valeurs de mesure caractérisant un état de l'installation au point de mesure respectif ;
- on transmet les valeurs de mesure relevées à un dispositif (12) de poste de conduite, qui, à l'aide des valeurs de mesure, détermine des valeurs d'état indiquant un état en des points d'observation d'état donnés à l'avance de l'installation et
- on utilise les valeurs d'état pour produire une indication visuelle de l'état de l'installation ;
- on met à disposition, par le dispositif (12) de poste de conduite, pour au moins des points d'observation d'état sélectionnés, des valeurs de seuil d'état, qui délimitent une plage de fonctionnement autorisée de l'installation aux points d'observation d'état respectifs ;
- on compare les valeurs d'état déterminées, pour les points d'observation d'état sélectionnés, aux valeurs de seuil d'état associées ;
- on produit une représentation (23, 24, 25, 91, 92, 93) par le dispositif (12) de poste de conduite ;
- on produit, par le dispositif (12) de poste de conduite, également une indication visuelle d'une topologie de réseau de l'installation et on l'affiche au moyen d'un dispositif (13) d'affichage ;
- on associe, au moins aux valeurs d'état pour lesquelles on produit une représentation graphique, respectivement, une information d'emplacement indiquant la position de leur point d'observation d'état respectif dans l'installation et
- on représente la représentation (23, 24, 25, 91, 92, 93) graphique respective, en utilisant l'information d'emplacement, respectivement, au point de la topologie du réseau affichée, qui correspond à sa position dans l'installation,
**caractérisé en ce que**
la représentation est graphique et **en ce que**
on produit la représentation exclusivement pour les valeurs d'état pour lesquelles on détecte un franchissement ayant déjà lieu ou imminent de la valeur de seuil d'état associée et **en ce que**
- on produit la représentation (23, 24, 25) graphique avec une surface de base circulaire ou elliptique, dont le diamètre dépend de la dimension de la valeur d'état respective par rapport à la valeur de seuil d'état associée.

2. Procédé suivant la revendication 1,
**caractérisé en ce que**
l'installation est
- un réseau d'alimentation en énergie électrique ou
- un réseau pneumatique, notamment un réseau de distribution de gaz ou d'air ou
- un réseau hydraulique, notamment un réseau de distribution d'eau ou d'huile ou
- un réseau de données ou
- un réseau d'information ou
- un réseau de communication ou
- un réseau de circulation, notamment un réseau routier ou un réseau ferroviaire.

3. Procédé suivant la revendication 1 ou 2,
**caractérisé en ce que**
- on forme les valeurs d'état directement à partir des valeurs de mesure ou on les détermine en effectuant un procédé d'estimation d'état, un procédé de calcul de flux de charge, un procédé de pronostic de flux de charge ou une combinaison de ces procédés.

4. Procédé suivant la revendication 3
**caractérisé en ce que**
- on indique (23, 24, 25) la valeur du seuil d'état respectif par la représentation graphique.

5. Procédé suivant l'une des revendications précédentes,
- on affiche la représentation (91, 92, 93) graphique sous la forme d'un corps en trois dimensions, si un franchissement de valeur de seuil a eu lieu.

6. Procédé suivant la revendication 5,
**caractérisé en ce que**
- on affiche, par la représentation (91, 92, 93) graphique, également le sens du franchissement de la valeur de seuil.

7. Procédé suivant la revendication 5 ou 6,
**caractérisé en ce que**
- la longueur d'un axe vertical de la représentation (91, 92, 93) graphique dépend de la grandeur de la valeur d'état respective par rapport à la valeur de seuil d'état associée.

8. Procédé suivant l'une des revendications précédentes,
**caractérisé en ce que**
- une coloration et/ou une transparence de la représentation (23, 24, 25, 91, 92, 93) graphique dépend de la grandeur de la valeur d'état respective par rapport à la valeur de seuil d'état associée et/ou d'une appartenance de la représentation (23, 24, 25, 91, 92, 93) graphique à un groupe déterminé des points d'observation associés, respectivement, dans l'installation.

9. Procédé suivant l'une des revendications précédentes,
**caractérisé en ce que**
- on détermine également des valeurs de réserve, qui indiquent une réserve de réglage dans l'installation et
- on représente la valeur des valeurs de réserve en tenant compte de sa position dans l'installation, conjointement avec la topologie du réseau.

10. Procédé suivant la revendication 9,
**caractérisé en ce que**
- pour une installation sous la forme d'un réseau d'alimentation en énergie électrique, les valeurs de réserve indiquent une valeur de réserve inductive et/ou capacitive.

11. Dispositif (12) de poste de conduite pour contrôler une installation ayant une topologie réticulée, comprenant
- un dispositif d'entrée de mesure, conçu pour relever des valeurs de mesure caractérisant un état de l'installation en des points de mesure différents ;
- un dispositif de calcul d'état, conçu pour déterminer des valeurs d'état à l'aide des valeurs de mesure, les valeurs d'état indiquant un état électrique en des points d'observation d'état donnés à l'avance de l'installation ;
- un dispositif (14) d'affichage, conçu pour afficher visuellement l'état de l'installation ;
**caractérisé en ce que**
- le dispositif de poste de conduite comprend un dispositif d'exploitation, conçu pour effectuer un procédé suivant l'une des revendications 1 à 10.
